# EUROPÄISCHE PATENTSCHRIFT

(11) **EP 3 334 915 B1**
(45) Veröffentlichungstag und Bekanntmachung des Hinweises auf die Patenterteilung: **03.06.2020**
(21) Anmeldenummer: 16754244.8
(22) Anmeldetag: 10.08.2016
(51) Int. Cl.: F16C 7/04, F02B 75/04, F16C 7/06

(54) **HUBKOLBENMASCHINE, INSBESONDERE BRENNKRAFTMASCHINE**
RECIPROCATING PISTON ENGINE, IN PARTICULAR INTERNAL COMBUSTION ENGINE
MOTEUR À PISTONS ALTERNATIFS, EN PARTICULIER MOTEUR À COMBUSTION INTERNE

(30) Priorität: 10.08.2015 AT 507132015; 14.12.2015 AT 510622015
(43) Veröffentlichungstag der Anmeldung: 20.06.2018
(73) Patentinhaber: AVL List GmbH, 8020 Graz (AT)
(72) Erfinder: SALZGEBER, Kurt, 8301 Lassnitzhoehe (AT); THEISSL, Mario, 8541 Schwanberg (AT)
(74) Vertreter: Breuer Friedrich Hahner Patentanwälte PartG mbB
(86) Internationale Anmeldenummer: PCT/EP2016/069093
(87) Internationale Veröffentlichungsnummer: WO 2017/025580

(56) Entgegenhaltungen:
- EP-A1- 0 438 121
- DE-A1-102005 055 199
- DE-A1-102013 111 617
- US-A- 2 989 954

## Beschreibung

Die Erfindung betrifft eine Hubkolbenmaschine, insbesondere Brennkraftmaschine, mit zumindest einer längenverstellbaren Pleuelstange, welche zumindest einen ersten Stangenteil mit einem kleinen Pleuelauge und zumindest einen zweiten Stangenteil mit einem großen Pleuelauge aufweist, welche beiden Stangenteile mittels einer Längenverstelleinrichtung teleskopartig zu- und/oder ineinander verschiebbar sind, wobei die Längenverstelleinrichtung in zumindest einer Stellung eines Steuerventils mit zumindest einem Ölkanal strömungsverbindbar ist, und in zumindest einer zweiten Stellung des Steuerventils vom Ölkanal trennbar ist, wobei das Steuerventil elektrisch schaltbar und induktiv betätigbar ist.

Die Druckschrift US 2,217,721 A offenbart eine Brennkraftmaschine mit einer längenverstellbaren Pleuelstange mit einem ersten und einem zweiten Stangenteil, welche Stangenteile teleskopartig zu - und ineinander verschiebbar sind. Zwischen den beiden Stangenteilen ist ein Hochdruckraum aufgespannt, in den ein Ölkanal einmündet. Zur Rückbefüllung und Entleerung des Hochdruckraumes mit Öl und somit zur Längenverstellung der Pleuelstange ist ein Steuerventil mit einem axial verschiebbaren Verschlussteilelement vorgesehen, welches durch eine Rückstellfeder in eine erste geschlossene Stellung und durch Öldruck entgegen der Kraft der Rückstellfeder in eine zweite offene Stellung verschiebbar ist.

Aus der AT 514 071 B1 ist eine ähnliche längenverstellbare Pleuelstange bekannt, wobei in einer Ausführungsvariante das Steuerventil einen Stellkolben aufweist, welcher elektromagnetisch durch eine im Kurbelgehäuse angeordnete Induktionsspule betätigbar ist.

Weitere längenverstellbare Pleuelstangen, welche induktiv betätigt werden, sind aus den Veröffentlichungen DE 10 2007 040 699 A1, DE 102 30 427 A1, DE 198 58 245 A1 und DE 197 57 871 A1 bekannt.

Aufgabe der Erfindung ist es, eine verbesserte Hubkolbenmaschine bereitzustellen, insbesondere ist es eine Aufgabe auf möglichst einfache, platzsparende und zuverlässige Weise eine flexible Veränderung des Verdichtungsverhältnisses der Hubkolbenmaschine und/oder einzelner Zylinder der selbigen zu ermöglichen.

Erfindungsgemäß wird dies in einem ersten Aspekt der Erfindung dadurch erreicht, dass das Steuerventil einer Hubkolbenmaschine mit zumindest einer pleuelstangenfesten Induktionseinrichtung elektrisch verbindbar oder verbunden ist, in welcher in zumindest einer Stellung der Pleuelstange mittels zumindest einer - vorzugsweise - kurbelgehäusefesten oder kurbelwellenfesten Magneteinrichtung ein elektrischer Strom induzierbar ist. Dadurch ist eine rasche und einfache Umschaltung des Verdichtungsverhältnisses möglich, die dauerhaft und sehr verschleißarm betrieben werden kann und den Betriebsbedingungen im Motorbereich gut Widerstand leistet. Insbesondere erlaubt die Erfindung eine betriebspunktunabhängige aktive Umschaltung des Verdichtungsverhältnisses, was die Umsetzung von Emissions- und Verbrauchsvorteilen ermöglicht.

In einer Variante der Erfindung weist die Induktionseinrichtung zumindest eine Induktionsschleife auf, wobei vorzugsweise die Induktionsschleife durch zumindest eine auf die Pleuelstange aufgedruckte Leiterbahn gebildet ist. Dies ermöglicht eine äußerst kompakte Bauweise und eine einfache Fertigung. Dadurch können Verschleißerscheinungen minimiert werden oder die Ausfallssicherheit erhöht werden. Insbesondere ist es möglich, die Induktionseinrichtung an zumindest einer Stirnseite der Pleuelstange und/oder an einer Seitenfläche eines Lagerdeckels der Pleuelstange anzuordnen ist. Günstigerweise erstreckt sich die Induktionseinrichtung dabei zumindest teilweise, bevorzugt zur Hälfte um den Umfang des großen Pleuelauges. Dabei kann in Einbaulage die obere oder die untere Hälfte des Umfangs mit der Induktionseinrichtung versehen sein.

In einer weiteren Ausführungsvariante der Erfindung ist vorgesehen, dass die Magneteinrichtung Polsegmente mit unterschiedlicher magnetischer Polung aufweist, die vorzugsweise als Magnetring mit mehreren aufeinanderfolgenden Polsegmenten mit unterschiedlicher magnetischer Polung angeordnet sind. Dadurch kann der Strom in der Induktionseinrichtung permanent induziert werden. Somit kann die Induktionseinrichtung unabhängig vom Kurbelwinkel Strom zum Schalten des Steuerventils zur Verfügung stellen.

Vorzugsweise ist die Magneteinrichtung auf oder in zumindest einer Kurbelwange der Kurbelwelle angeordnet. Die elektromagnetische Erregung wird somit durch die segmentweise Magnetisierung der den Pleuelseitenflächen zugewandten Kurbelwangenelemente hervorgerufen. Alternativ dazu kann auch vorgesehen sein, dass die Magneteinrichtung in einem Kurbelgehäuse oder in einer Ölwanne angeordnet ist.

Weitere Vorteile der Erfindung lassen sich erzielen, wenn die Magneteinrichtung zumindest einen Permanentmagneten aufweist.

Um das Steuerventil zu schalten, ist im Stromfluss zwischen der Induktionseinrichtung und dem Steuerventil vorzugsweise zumindest eine elektrische Schaltvorrichtung angeordnet. Besonders vorteilhaft ist es, wenn die elektrische Schaltvorrichtung durch einen vorzugsweise pleuelstangenfesten Signalempfänger betätigbar ist, welcher mit einem vorzugsweise gehäusefesten Signalgeber - beispielsweise einer Antenne - kommuniziert. Zur berührungsfreien Signalübertragung des Ansteuerungssignals für die elektrische Schaltvorrichtung können sowohl analoge elektrische oder magnetische Felder in Form von Näherungssensoren, sowie digital zu verarbeitende elektromagnetische Signalimpulsfolgen in Form einer telemetrischen Signalübertragungseinheit eingesetzt werden.

In einer Ausführungsvariante der Erfindung ist vorgesehen, dass die Magneteinrichtung schaltbar ausgeführt ist. Dadurch können Varianten umgesetzt werden, die ohne elektrische Schaltvorrichtungen in der Pleuelstange, Signalempfänger und Signalgeber zur berührungslosen Signalübertragung eines Ansteuersignals auskommen.

Vorzugsweise ist dabei vorgesehen, dass die Magneteinrichtung zumindest eine Statorspule aufweist, wobei vorzugsweise der Spulenstrom der Statorspule schaltbar ist. Durch Schalten des Spulenstroms wird das Magnetfeld und somit die in die Induktionsschleifen der Pleuelstange induzierte Spannung gesteuert. Die Aktivierung bzw. Deaktivierung des Steuerventils erfolgt somit unmittelbar durch das Ein- und Ausschalten des Spulenstroms der Statorspule.

Alternativ dazu - oder zusätzlich - kann vorgesehen sein, dass die Magneteinrichtung in ihrer Lage verstellbar ausgeführt ist, wobei vorzugsweise die Magneteinrichtung in einem Kurbelgehäuse oder in einer Ölwanne verschieb- oder schwenkbar gelagert ist. Durch die Lageverstellung der Magneteinrichtung wird der Abstand zwischen den im Kurbelgehäuse oder der Ölwanne angeordneten Permanentmagneten bzw. Statorspulen und den pleuelstangenfesten Induktionsschleifen verstellt und damit die in den Induktionsschleifen induzierte Spannung gesteuert.

Das vorzugsweise als Umschaltventil ausgebildete Steuerventil kann beispielsweise durch ein Piezoventil oder ein Magnetventil, insbesondere ein 3/2 Wegeventil gebildet sein. 3/2-Wegeventil bedeutet hier, dass das Ventil drei Anschlüsse und zwei Schaltstellungen aufweist, wobei in jeder der zwei Schaltstellungen zwei der Anschlüsse miteinander verbunden sind.

In einer Variante der Erfindung bildet der zweite Stangenteil der Pleuelstange einen Führungszylinder und der erste Stangenteil ein im Führungszylinder längsverschiebbares Kolbenelement aus, wobei auf zumindest einer Seite des Kolbenelementes zwischen dem zweiten Stangenteil und dem Kolbenelement ein Hochdruckraum aufgespannt ist. Bevorzugt ist ein erster Hochdruckraum auf der dem großen Pleuelauge zugewandten Seite ausgebildet, ein ringförmiger zweiter Hochdruckraum auf Seiten des kleinen Pleuelauges.

Im Rahmen der Erfindung kann weiters vorgesehen sein, dass zumindest ein Hochdruckraum mit einer schaltbaren Labyrinthdichtung verbunden ist. Durch die schaltbare Labyrinthdichtung kann die Größe der Leckage des zweiten Hochdruckraumes verändert werden.

Ein Vorteil der Erfindung gegenüber bekannten elektrisch angesteuerten längenverstellbaren Pleuelstangen ist, dass auf elektrisch isolierte Stromleiter im Bereich der Teilungsebene zwischen Pleuelstange und Pleuellagerdeckel verzichtet werden kann.

In einer weiteren Ausführungsvariante der Hubkolbenmaschine weist diese zwei Induktionseinrichtungen mit jeweils wenigstens einer Generatorspule auf, wobei Generatorspulen verschiedener Induktionseinrichtungen in Bezug auf eine Drehrichtung der Pleuelstange nebeneinander angeordnet sind. Durch das Vorsehen von zwei Induktionseinrichtungen können zwei Spulen eines elektromagnetischen Steuerventils separat geschaltet werden, ohne einen Schalter in der Pleuelstange vorsehen zu müssen.

In einer weiteren Ausführungsvariante der Hubkolbenmaschine sind verschiedene Generatorspulen gleicher Induktionseinrichtungen in Bezug auf eine Drehrichtung der Pleuelstange hintereinander angeordnet. Werden die Generatorspulen in einer Reihe angeordnet, können diese alle mit einer Magneteinrichtung zusammenwirken, welche in etwa der Breite der Generatorspulen entspricht. Hierdurch kann bei gleichen Bauraumanforderungen die übertragene Leistung erhöht werden.

In einer weiteren Ausführungsvariante der Hubkolbenmaschine weisen die Generatorspulen jeweils zwei Polschenkel mit jeweils einem Pol auf, wobei die Pole in Bezug auf die Pleuelstange wenigstens im Wesentlichen nach außen ausgerichtet sind, insbesondere in wenigstens im Wesentlichen radialer Richtung in Bezug auf eine Drehachse der Pleuelstange. Vorzugsweise sind die Pole dabei in etwa parallel ausgerichtet. Weiter vorzugsweise sind die Kerne der Generatorspulen, welche insbesondere die Polschenkel und die Pole bilden, als Blechpaket aufgebaut. Dieses wird vorzugsweise auf dem Pleueldeckel mittels Schweißen, Verbördeln, Verschrauben, Verkleben, etc. befestigt.

In einer weiteren Ausführungsvariante der Hubkolbenmaschine sind die Pole einer Generatorspule in Bezug auf die Drehrichtung der Pleuelstange hintereinander angeordnet und/oder Pole unterschiedlicher Induktionseinrichtungen sind um einen halben Pol versetzt angeordnet. Beide Anordnungen sind besonders platzsparend. Insbesondere kann durch das versetzen der Pole der vorhandene Raum für die Wicklungen der Generatorspulen optimal genutzt werden.

In einer weiteren Ausführungsvariante der Hubkolbenmaschine ist die Magneteinrichtung in Richtung einer Drehachse der Pleuelstange bzw. einer Kurbelwellenachse verschiebbar. Durch ein Verschieben dieser Magneteinrichtung können die Spulen des Steuerventils geschaltet werden.

In einer weiteren Ausführungsvariante weist die Hubkolbenmaschine zwei Magneteinrichtungen auf, wobei jeweils eine Magneteinrichtung gegenüber einer der beiden Induktionseinrichtungen angeordnet ist und vorzugsweise wenigstens eine Statorspule aufweist. Dies ermöglicht ein besonders einfaches Schalten der Spulen des Steuerventils mittels der Stromversorgung der Magneteinrichtungen.

In einer weiteren Ausführungsvariante der Hubkolbenmaschine weist/weisen die Magneteinrichtung oder die Magneteinrichtungen die Form wenigstens eines Abschnitts einer Pleuelgeige der Pleuelstange auf. Hierdurch wird eine möglichst effiziente Energieübertragung zwischen Magneteinrichtung und Induktionseinrichtung gewährleistet. In einer weiteren Ausführungsvariante der Hubkolbenmaschine weist/weisen die Magneteinrichtung oder die Magneteinrichtungen jeweils eine Statorspule mit einer mehrphasigen Wicklung auf, eingerichtet, um ein mehrphasiges, insbesondere 2- oder 3-phasiges, Drehfeld, zu erzeugen. Durch eine Variation der Drehzahl/Frequenz des Drehfelds kann die Energieübertragung zwischen Magneteinrichtung und Induktionseinrichtung variiert werden, mithin die Funktion des Steuerventils kontrolliert werden.

In einer weiteren Ausführungsvariante weist die Hubkolbenmaschine eine Steuerung aufweist, eingerichtet um das Drehfeld gegenläufig zur Pleuelbewegung zu erzeugen.

In einer weiteren Ausführungsvariante der Hubkolbenmaschine ist die Steuerung des Weiteren eingerichtet, um eine Drehzahl des Drehfelds in Abhängigkeit der Drehzahl einer Kurbelwelle einzustellen, wobei vorzugsweise eine Relativdrehzahl zwischen Drehfeld und Kurbelwelle von etwa 20.000 bis etwa 40.000 U/min, bevorzugter von etwa 30.000 U/min eingestellt wird.

Die Merkmale einzelner Ausführungsvarianten können beliebig miteinander kombiniert werden, sofern dies nicht ausdrücklich ausgeschlossen ist. Die Merkmale und Vorteile des ersten Aspekts der Erfindung sind dabei auf den zweiten Aspekt der Erfindung, welcher im Folgenden dargelegt wird, anwendbar und umgekehrt.

Ein zweiter Aspekt der Erfindung betrifft ein Verfahren zum Betrieb einer Hubkolbenmaschine, wobei das Drehfeld gegenläufig zur Pleuelbewegung erzeugt wird.

In einer Ausführungsvariante des Verfahrens wird eine Drehzahl des Drehfelds in Abhängigkeit der Drehzahl einer Kurbelwelle eingestellt, wobei vorzugsweise eine Relativdrehzahl zwischen Drehfeld und Kurbelwelle von etwa 20.000 bis etwa 40.000 U/min, bevorzugter von etwa 30.000 U/min eingestellt wird.

In einer weiteren Ausführungsvariante des Verfahrens wird ein Spulenstrom einer Statorspule (31) in der Weise verändert, um eine Veränderung einer induzierten Energie aufgrund einer Drehzahländerung einer Kurbelwelle auszugleichen.

Die Erfindung wird im Folgenden anhand eines nicht einschränkenden Ausführungsbeispiels, das in den Figuren dargestellt ist, näher erläutert. Darin zeigen schematisch
Fig. 1 eine Pleuelstange einer erfindungsgemäßen Brennkraftmaschine in einem Längsschnitt in einer ersten Ausführungsvariante,
Fig. 2 einen Ausschnitt der Pleuelstange in einer Ausführung dieser ersten erfindungsgemäßen Ausführungsvariante,
Fig. 3 eine Kurbelkröpfung samt Pleuelstange in einem Längsschnitt durch die Kurbelwelle,
Fig. 4 einen Ausschnitt der Pleuelstange samt Magneteinrichtung in einer zweiten Ausführung der ersten Ausführungsvariante,
Fig. 5 eine Pleuelstange einer erfindungsgemäßen Brennkraftmaschine in einer zweiten Ausführungsvariante,
Fig. 6 eine Pleuelstange einer erfindungsgemäßen Brennkraftmaschine in einer dritten Ausführungsvariante,
Fig. 7 eine Pleuelstange einer erfindungsgemäßen Brennkraftmaschine in einer vierten Ausführungsvariante bei deaktivierter Magneteinrichtung,
Fig. 8 diese Pleuelstange bei aktivierter Magneteinrichtung,
Fig. 9 eine vergrößerte Darstellung eines Lagerdeckels mit zwei Induktionseinrichtungen;
Fig. 10 eine Anordnung von zwei Magneteinrichtungen in Bezug auf zwei Induktionseinrichtungen auf einem Lagerdeckel; und
Fig. 11 eine Statorspule mit einer mehrphasigen Wicklung.

Funktionsgleiche Teile sind in den Ausführungsvarianten mit gleichen Bezugszeichen versehen.

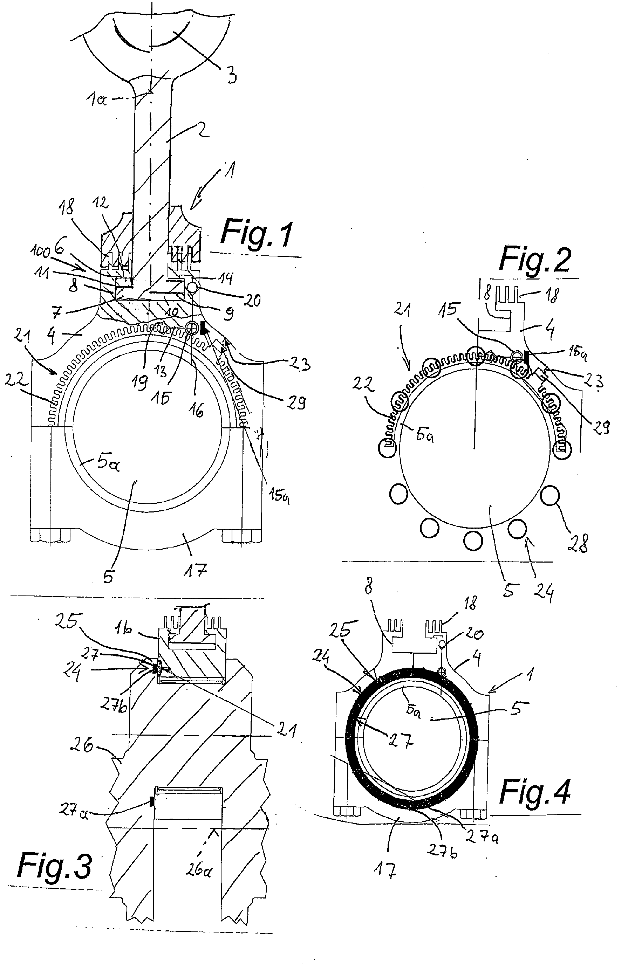

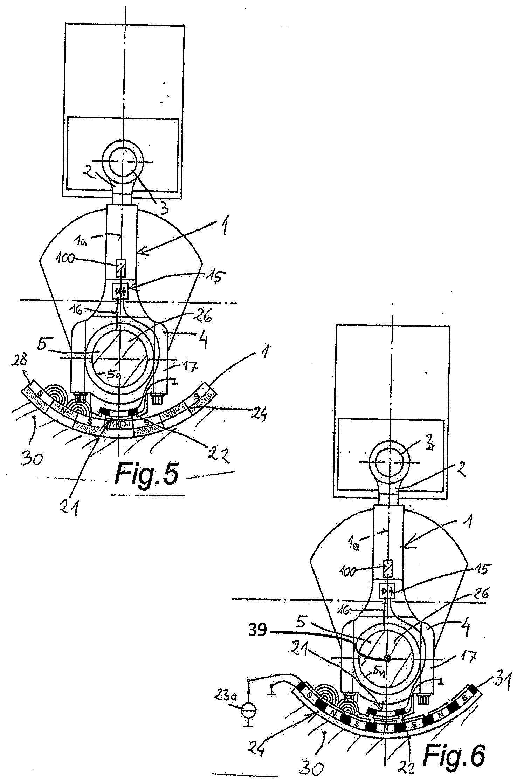

Fig. 1 zeigt eine zweigeteilte Pleuelstange 1 einer Hubkolbenmaschine, insbesondere einer Brennkraftmaschine, mit einem oberen ersten Stangenteil 2 mit dem kleinen Pleuelauge 3 zur Verbindung mit einem nicht weiter dargestellten Kolben und einen unteren zweiten Stangenteil 4 mit dem ein Pleuellager 5a ausbildenden großen Pleuelauge 5 zur Verbindung mit einer Kurbelwelle 26. Der erste Stangenteil 2 ist gegenüber dem zweiten Stangenteil 4 zwischen einer ausgezogenen Lage und einer eingeschobenen Lage verstellbar. Zur Längenverstellung ist eine - vorzugsweise druckölbetätigte - Längenverstelleinrichtung 100 vorgesehen, die in Fig. 5 bis Fig. 8 schematisch dargestellt ist. Bei der Längenverstelleinrichtung 100 kann es sich beispielsweise um die in Fig. 1 bis Fig. 4 dargestellte Variante handeln. Auch andere Varianten, bei denen eine mit Öl steuerbare Längenverstellung vorgesehen ist, sind möglich. Da dieser Aspekt einen Randbereich der Erfindung betrifft, wird weiter unten nur eine mögliche Variante beschrieben, wobei dadurch die Verwendung anderer Lösung ausdrücklich nicht ausgeschlossen wird.

In Fig. 1 ist die Pleuelstange 1 entlang der Längsachse 1a der Pleuelstange 1 geteilt dargestellt, wobei sie links in ihrer ersten Stellung mit kurzer Pleuellänge und abgesenktem erstem Stangenteil 2 und rechts in ihrer zweiten Stellung mit langer Pleuellänge und angehobenem zweiten Stangenteil 4 dargestellt ist.

Zwischen der Längenverstelleinrichtung 100, die bevorzugt im mittleren Bereich der Pleuelstange 1 angeordnet ist, und dem Pleuellager 5a des großen Pleuelauges 5 ist ein Steuerventil 15 angeordnet, das über eine Öldruckleitung 16 mit dem Pleuellager 5a verbunden ist. Zwischen Steuerventil 15 und Längenverstelleinrichtung 100 besteht ebenfalls eine mit Öl beaufschlagbare Verbindung.

Zur Betätigung des Steuerventils 15 weist die Pleuelstange 1 erfindungsgemäß eine Induktionseinrichtung 21 auf, welche über eine elektrische Schaltvorrichtung 23 mit einer Spule 15a des Steuerventils 15 elektrisch verbunden werden kann. Die elektrische Schaltvorrichtung 23 ist in der elektrischen Verbindung zwischen der Induktionsschleife 22 und dem Steuerventil 15 angeordnet.

Die Induktionseinrichtung 21 weist gemäß der ersten Ausführungsvariante der Erfindung zumindest eine Induktionsschleife 22 auf, welche in den dargestellten Ausführungen durch zumindest eine auf die Pleuelstange 1 aufgedruckte Leiterbahn gebildet ist, die eine Vielzahl von aufeinanderfolgenden Induktionsschlaufen aufweist. Die Induktionsschleife 22 ist beispielsweise an zumindest einer Stirnseite 1b der Pleuelstange 1 im Bereich des großen Pleuelauges 5 angeordnet. Sie kann aber auch alternativ oder zusätzlich an einer Seite eines Lagerdeckels 17 des Pleuellagers 5a vorgesehen werden. Günstigerweise erstreckt sich die Induktionsschleife 22 auf der Stirnseite 1b über zumindest den halben Umfang des großen Pleuelauges 5. Dabei kann es sich um den oberen oder unteren halben Umfang handeln.

Des Weiteren weist die Induktionseinrichtung 21 eine Magneteinrichtung 24 auf, welche an einem der Pleuelstange 1 benachbarten Teil angeordnet ist. In den Ausführungsbeispielen ist die Magneteinrichtung 24 an oder in einer der Stirnseite 1b der Pleuelstange 1 bzw. des Lagerdeckels 17 benachbarten Kurbelwange 25 der Kurbelwelle 26 angeordnet. Die Magneteinrichtung 24 ist dabei der Induktionsschleife 22 zugewandt.

Die Magneteinrichtung 24 kann als Magnetring 27 ausgebildet sein, welcher mehrere aufeinanderfolgende Polsegmente 27a, 27b mit unterschiedlicher magnetischer Polung aufweist (siehe Fig. 4). Alternativ oder zusätzlich dazu kann der Magnetring 27 einzelne beispielsweise zylindrische Permanentmagnete 28 aufweisen, welche beispielsweise in axialen Bohrungen der Kurbelwange 25 angeordnet sind (axial bedeutet hier entlang der Längsachse 26a der Kurbelwelle 26 orientiert, also normal zur Blattebene der Zeichnung). In Fig. 2 ist schematisch als Beispiel die Lage der einzelnen Permanentmagneten 28 in der Kurbelwange 25 der Kurbelwelle 26 angedeutet. Permanentmagnete 28 eignen sich beispielsweise bei erhöhtem Leistungsbedarf.

Während der Relativbewegung der Pleuelstange 1 und der Kurbelwange 25 überstreicht die Magneteinrichtung 24 die Induktionsschleifen 22 mit wechselnder Polarität. Dadurch wird in den aufgedruckten Induktionsschleifen 22 eine Spannung induziert, solange die Kurbelwelle 26 dreht. Die erzeugte elektrische Leistung kann zum dauerhaften Betrieb einer elektrischen Schaltung genutzt werden, welche in der Lage ist, über ein berührungsfrei übertragenes Signal die elektrische Schaltvorrichtung 23 zu betätigen, wodurch das als elektrisches Schaltventil ausgeführte Steuerventil 15 aktiviert oder deaktiviert wird.

In den Fig. 1 bis Fig. 4 ist eine konkrete Variante der Längenverstelleinrichtung 100 dargestellt, bei der erster 2 und zweiter Stangenteil 4 der Pleuelstange 1 um einen durch einen Endanschlag 6 begrenzten Verstellbereich in Richtung der Längsachse 1a der Pleuelstange 1 verstellbar sind. Im oberen ersten Stangenteil 2 ist ein im Wesentlichen zylindrisches Kolbenelement 7 befestigt, welches als Stufenkolben ausgeführt ist.

Der erste Stangenteil 2 und der zweite Stangenteil 4 der Pleuelstange 1 sind in Druckrichtung hydraulisch gekoppelt und in der Gegenrichtung mechanisch begrenzt. Druckrichtung bedeutet hier die Richtung, in die die Kraft der Verbrennung im Kolbenraum auf einen nicht dargestellten Kolben wirkt.

Das Kolbenelement 7 ist in einem Führungszylinder 8 des unteren zweiten Stangenteils 3 der Pleuelstange 1 axial (in Richtung der Längsachse 1a der Pleuelstange 1) verschiebbar geführt, wobei zwischen einer dem großen Pleuelauge 5 zugewandten ersten Stirnfläche 9 des Kolbenelementes 7 und dem zweiten Stangenteil 4 bzw. dem Führungszylinder 8 in einer ausgezogenen Lage der beiden Stangenteile 2, 3 ein erster Hochdruckraum 10 aufgespannt wird. Weiters wird zwischen einer dem kleinen Pleuelauge 3 zugewandten zweiten Stirnfläche 11 des Kolbenelementes 7 und dem zweiten Stangenteil 3 in einer zusammengeschobenen Lage der beiden Stangenteile 2, 3 ein zweiter Hochdruckraum 12 aufgespannt. Der zweite Hochdruckraum 12 ist dabei im Wesentlichen ringförmig ausgebildet.

Der erste Hochdruckraum 10 und der zweite Hochdruckraum 12 sind über erste bzw. zweite Ölkanäle 13 bzw. 14 mit einem beispielsweise als einfaches Umschaltventil ausgeführten Steuerventil 15 verbunden, welches wahlweise die Strömungsverbindung zwischen einer vom Pleuellager 5a ausgehenden Öldruckleitung 16 und dem ersten Ölkanal 13 oder dem zweiten Ölkanal 14 herstellt. Das Pleuellager 5a ist mit einer nicht weiter dargestellten Ölversorgungsleitung in der Kurbelwelle 26 verbunden. Zwischen dem Steuerventil 15 dem ersten Hochdruckraum 10 bzw. zweiten Hochdruckraum 12 ist im ersten Ölkanal 13 bzw. zweiten Ölkanal 14 jeweils ein in Richtung der Hochdruckräume 10, 12 öffnendes Rückschlagventil 19, 20 angeordnet. Das Steuerventil 15 kann in der Pleuelstange 1 oder im Lagerdeckel 17 des Pleuellagers 5a angeordnet sein.

Der erste Hochdruckraum 10 und der zweite Hochdruckraum 12 können mit - nicht weiter dargestellten - Endlagendämpfungen versehen sein, um Stöße und Schläge beim Schalten der Pleuelstange 1 zu minimieren.

Bei Aktivierung des Steuerventiles 15 wird die Strömungsverbindung zwischen der Öldruckleitung 16 und einem der beiden Ölkanäle, beispielsweise dem ersten Ölkanal 13 freigegeben, und der andere Ölkanal, beispielsweise der zweite Ölkanal 14, gesperrt. Dadurch nimmt die Pleuelstange 1 etwa ihre ausgezogene Länge zum Erreichen eines hohen Verdichtungsverhältnisses ein, wenn der erste Hochdruckraum 10 mit Öl befüllt wird. Dieses Befüllen wird unterstützt durch die Massenkraft bei Betrieb des Pleuels 1.

Bei Deaktivierung wird die Strömungsverbindung zwischen der Öldruckleitung 16 und dem einen Ölkanal, beispielsweise dem ersten Ölkanal 13 gesperrt, und der andere Ölkanal, beispielsweise der zweite Ölkanal 14, freigegeben. Die Pleuelstange 1 nimmt somit etwa ihre verkürzte Länge zur Erzielung eines niedrigen Verdichtungsverhältnisses im Brennraum ein. Dies erfolgt durch Befüllen des zweiten Hochdruckraums 12 mit Öl bzw. Entleeren des ersten Hochdruckraums 10 (beispielsweise durch nicht nähere dargestellte Leitungen bzw. in Kombination mit dem Schaltventil 15).

Das Steuerventil 15 schaltet somit die Öldruckversorgung zwischen den beiden Hochdruckräumen 10, 12 wahlweise um, wodurch nur ein vergleichsweise geringer elektrischer Leistungsbedarf vorliegt ist.

Die elektrische Schaltvorrichtung 23 ist mit einem Signalempfänger 29, welcher beispielsweise in der Pleuelstange 1 angeordnet ist, verbunden und wird somit über ein kabellos übertragenes Signal betätigt. Der Signalempfänger 29 kommuniziert mit einem beispielsweise im Motorgehäuse angeordneten, in den Figuren nicht weiter dargestellten Signalgeber (Antenne). Zur berührungsfreien Signalübertragung des Ansteuersignals für die elektrische Schaltvorrichtung 23 können sowohl analoge elektrische oder magnetische Felder in Form von Näherungssensoren, sowie digital zu verarbeitende elektromagnetische Signalimpulsfolgen in Form einer telemetrischen Signalübertragungseinheit eingesetzt werden.

Wie aus Fig. 1 ersichtlich ist, schließt an den zweiten Hochdruckraum 12 eine einstellbare bzw. schaltbare Dichtung an, welche hier als Labyrinthdichtung 18 ausgeführt ist. Der obere erste Stangenteil 2 und der untere zweite Stangenteil 4 stehen dabei über die einstellbare Labyrinthdichtung 18 miteinander im Eingriff.

Der untere erste Hochdruckraum 10 wird über den ersten Ölkanal 13, in dem das in Richtung des ersten Hochdruckraumes 10 öffnende erste Rückschlagventil 19 angeordnet ist, mit Öl befüllt. Der obere zweite Hochdruckraum 12 wird über einen zweiten Ölkanal 14, der ein in Richtung dieses zweiten Hochdruckraumes 12 öffnendes zweites Rückschlagventil 20 aufweist, mit Öl befüllt.

Das Steuerventil 15, von welchem der erste Ölkanal 13 und der zweite Ölkanal 14 ausgehen, kann zum Beispiel als elektrisch betätigbares 3/2-Wegeventil ausgeführt sein. Auch Ausführungen als Piezoventil oder Magnetventil sind möglich.

Soll die Pleuelstange 1 eine erste Stellung mit z.B. kurzer Stangenlänge einnehmen, beschickt das Steuerventil 15 den oberen zweiten Hochdruckraum 12 mit Öl. Durch die Massenkraft bewirkte Leckagen durch die Labyrinthdichtung 18 werden unmittelbar durch Nachschub über den zweiten Ölkanal 14 ausgeglichen.

Soll die Pleuelstange 1 in eine zweite Stellung mit z.B. langer Stangenlänge wechseln, wird das Steuerventil 15 umgestellt. Das erste Rückschlagventil 19 lässt Öl in den ersten Hochdruckraum 10 eintreten. Das Öl aus dem oberen zweiten Hochdruckraum 12 wird - in Fig. 1 nach oben - durch die Labyrinthdichtung 18 und teilweise auch vom zweiten Hochdruckraum 12 am Kolbenelement 7 vorbei in den unteren ersten Hochdruckraum 10 gepresst.

Wenn von der zweiten Stellung auf die erste Stellung umgestellt wird, tritt Öl am Kolbenelement 7 vorbei in den oberen zweiten Hochdruckraum 12.

Diese Lösung erlaubt einen sehr einfachen Aufbau ohne komplizierte Dicht- oder Beschaltungslösungen. Die Labyrinthdichtung 18 weist eine relativ lange Dichtstrecke auf, wodurch Leckagen verzögert bzw. das Abfließen des Öls über andere Wege (zum Beispiel vom zweiten Hochdruckraum 12 in den ersten Hochdruckraum 10) begünstigt werden. Über wenige Zyklen lassen sich Längenverstellungen der Pleuelstange 1 erreichen.

Bei der in Fig. 5 dargestellten zweiten Ausführungsvariante ist die Permanentmagnete 28 aufweisende Magneteinrichtung 24 fest mit einem Kurbelgehäuse 30 verbunden. Eine oder mehrere Induktionsschleifen sind auf der Pleuelstange 1, beispielsweise im Lagerdeckel 17 des Pleuellagers 5a, angeordnet. Wie bei der ersten Ausführungsvariante wird in den Induktionsschleifen 22 eine Spannung induziert, sobald und solange die Kurbelwelle 26 dreht. Diese erzeugte elektrische Leistung kann auch hier zum dauerhaften Betrieb einer elektrischen Schaltung genutzt werden, welche in der Lage ist, über ein berührungsfrei übertragenes Signal einen - nicht weiter in Fig. 5 dargestellten - elektrischen Schalter zu betätigen, wodurch das elektrische Steuerventil 15, das elektrisch schaltbar ist, aktiviert oder deaktiviert wird. Dieser elektrische Schalter wird in der beschriebenen Weise über einen Signalempfänger betätigt, der mit einem im Kurbelgehäuse 30 angeordneten Signalgeber drahtlos kommuniziert. Die Ansteuerung des Steuerventils 15 kann zum Füllen bzw. Leeren von Hochdruckräumen 10, 12 in der bereits beschriebene Weise erfolgen, wenn die Längenverstelleinrichtung 100 gemäß dem in den Fig. 1 bis 4 dargestellten Ausführungsbeispiel realisiert wird. Wie in den Fig. 5 bis 8 durch die schematische Darstellung der Längenverstelleinrichtung 100 dargestellt ist, kann diese auch auf andere Weise umgesetzt werden.

Bei der in Fig. 6 dargestellten dritten Ausführung weist die fest mit dem Kurbelgehäuse 30 oder einer Ölwanne verbundene schaltbare Magneteinrichtung 24 zumindest eine Statorspule 31 auf, deren Spulenstrom und damit das Magnetfeld der Induktionseinrichtung 21 durch eine außerhalb der Pleuelstange 1 angeordnete elektrische Schaltvorrichtung 23a verändert werden kann. Somit kann die Induktionseinrichtung 21 durch Ein- und Ausschalten des Spulenstromes der Statorspule 31 aktiviert bzw. deaktiviert werden. Die Elemente elektrischer Schaltvorrichtung 23 und Signalempfänger 29 in der Pleuelstange 1, sowie Signalgeber im Kurbelgehäuse 30 können somit entfallen, da das Umschalten des Steuerventils 15 direkt über die Statorspule 31 erfolgt. Dabei ist eine durch eine - nicht weiter dargestellte - Rückstellfeder des Steuerventils 15 definierte Ruhestellung des Steuerventils 15 dem stromlosen Zustand und eine Betriebsstellung des Steuerventils 15 dem bestromten Zustand der Statorspule 31 zugeordnet. Dies ermöglicht auf einfache Weise eine Fail-Safe-Funktion.

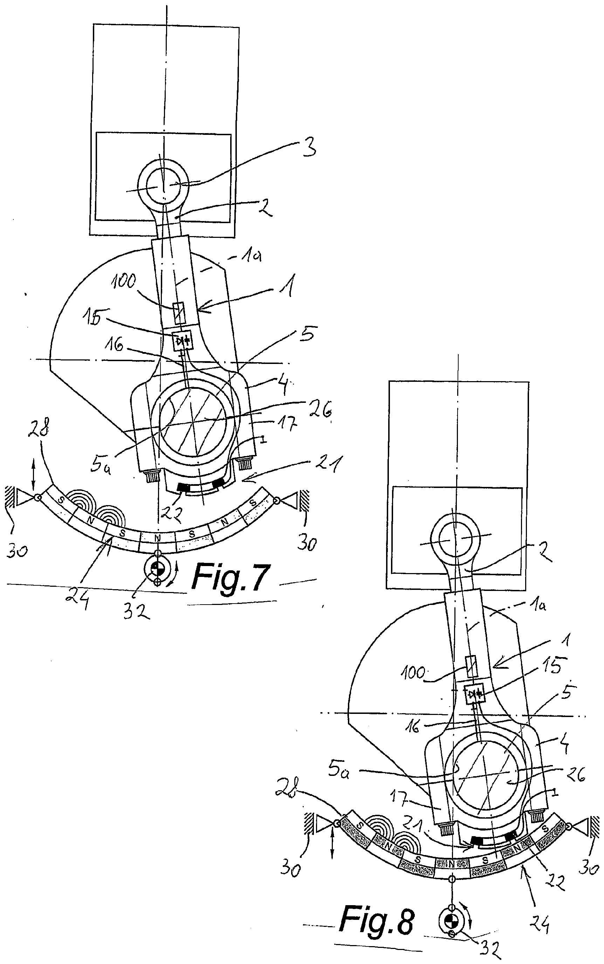

Die Fig. 7 und 8 zeigen eine vierte Ausführung, wobei die Magneteinrichtung 24 - ähnlich zu Fig. 5 - durch Permanentmagnete 28 gebildet ist. Allerdings ist die Magneteinrichtung 24 hier schaltbar ausgeführt. Zum Unterschied zu Fig. 6 wird die Schaltfunktion der Magneteinrichtung 24 aber hier dadurch erreicht, dass die Magneteinrichtung 24 verschiebbar oder schwenkbar im Kurbelgehäuse 30 gelagert ist. Durch die Verschiebe- oder Schwenkbewegung der Magneteinrichtung 24 über eine Betätigungseinrichtung 32 kann der minimale Abstand zwischen der den pleuelstangenfesten Induktionsschleifen 22 und den Permanentmagneten 28 vergrößert oder verkleinert, und damit das auf die Induktionsschleifen einwirkende magnetische Feld verändert werden. Das Aktivieren bzw. Deaktivieren der Induktionseinrichtung 21 erfolgt somit in einfacher Weise durch Verschieben oder Verschwenken der Permanentmagnete 28 mittels der Betätigungseinrichtung 32.

Auch hier sind keine weiteren elektrischen Elemente, wie elektrischer Schalter, Signalempfänger oder Signalgeber erforderlich. Wie in Fig. 7 ersichtlich, ist bei deaktivierter Induktionseinrichtung 21 die Magneteinrichtung 24 so weit von der Pleuelstange 1 entfernt, dass keine Spannung mehr in die Induktionsschleifen 22 der Pleuelstange 1 induziert werden kann, wodurch das Steuerventil 15 in seine stromlose Ruhestellung einnimmt. Bei aktivierter Induktionseinrichtung 21 wird der minimale Abstand zwischen Pleuelstange 1 und Magneteinrichtung 24 so weit vermindert, dass eine Spannung in die Induktionsschleifen 22 induziert und somit das Steuerventil 15 in seine Betriebsstellung geschaltet wird (Fig. 8).

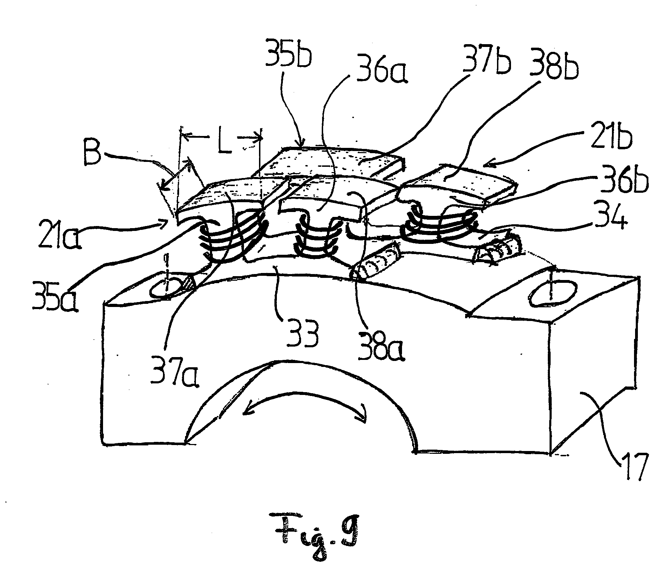

In Fig. 9 ist ein Lagerdeckel 17 mit zwei Induktionseinrichtungen 21a, 21b gezeigt. Eine erste Induktionseinrichtung 21a weist dabei wenigstens eine erste Generatorspule 33 auf, welche vorzugsweise als Schenkelpolgenerator ausgebildet ist. Der Spulenkern ist hierbei U-förmig mit zwei Schenkeln 35a, 36a ausgebildet, welche die beiden Pole 37a, 38a der ersten Generatorspule 33 bilden. Die Wicklungen der Spule sind in der dargestellten Ausführung auf die beiden Schenkel 35a, 36a aufgeteilt.

Auch die zweite Induktionseinrichtung 21b weist eine zweite Generatorspule 34 auf, welche ebenfalls als U geformt ist, und zwei Schenkel 35b, 36b aufweist, die mit zwei flächigen Polen 37b, 38b der zweiten Generatorspule 34 abschließen.

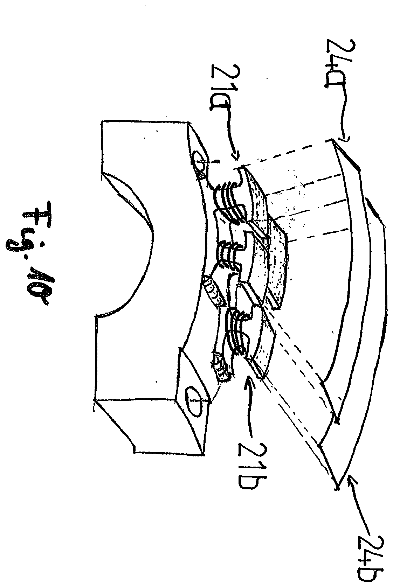

Die Pole 35a, 36a; 35b, 36b jeweils einer Generatorspule 33, 34 sind in Bezug auf die Drehrichtung der Pleuelstange, welche in dem Ausschnitt des Pleuelauges als doppelseitiger Pfeil angedeutet ist, wie die Pleuelstange 1 hintereinander angeordnet. Weitere Pole von Generatorspulen einer Induktionseinrichtung 21a, 21b werden in Bezug auf die Drehrichtung ebenfalls hintereinander angeordnet, so dass die Pole jeweils einer Induktionsrichtung 21a, 21b in einer Reihe angeordnet sind. Die Oberflächen der Pole jeweils einer Induktionseinrichtung 21a, 21b sind dabei vorzugsweise jeweils leicht abgerundet und eine Umhüllende an die Pole entspricht in etwa der Form der Pleuelgeige bzw. Pleuelbewegung, wie diese in einem Bereich zu erwarten ist, in welcher, wie in Fig. 10 dargestellt, eine Magneteinrichtung 24 oder mehrere Magneteinrichtungen 24a, 24b der Hubkolbenmaschine angeordnet sind. Vorzugsweise entspricht auch die Geometrie der Magneteinrichtungen 24a, 24b der Form der Pleuelgeige in jenem Bereich der Bewegung der Pleuelstange 1, in welchem die Magneteinrichtungen 24a, 24b angeordnet sind.

Die beiden Induktionseinrichtungen 21a, 21b dienen insbesondere dazu, um zwei Spulen des Steuerventils 15 getrennt ansteuern zu können. Hierdurch können zwei Spulen 15a eines Steuerventils 15 getrennt mit Strom bzw. Spannung versorgt werden und dadurch ein Schalten eines Steuerventils 15 mit zwei oder drei Schaltzuständen realisiert werden.

Vorzugsweise sind, wie in Fig. 10 gezeigt, zwei Magneteinrichtungen 24a, 24b vorhanden, welche jeweils gegenüber der jeweiligen zugehörigen Induktionsrichtung 21a, 21b angeordnet sind. Auf diese Weise so kann die Versorgung verschiedener Spulen 15a des Steuerventils 15 mittels einer oder mehreren elektrischen Schaltvorrichtungen 23a, wie in Fig. 6 gezeigt, realisiert werden, welche jeweils eine der beiden Magneteinrichtungen 24a, 24b aktiviert bzw. aktivieren können.

Alternativ kann eine Pleuelstange 1 mit zwei Induktionseinrichtungen 21a, 21b auch schaltbar durch eine einzige Magneteinrichtung 24 betrieben werden, wenn diese in wenigstens im Wesentlichen axialer Richtung der Kurbelwelle verschiebbar ist, so dass diese sowohl in den Nahbereich der ersten Induktionseinrichtung 21a als auch in den Nahbereich der zweiten Induktionseinrichtung 21b gebracht werden kann, um in der jeweiligen Induktionseinrichtung 21a, 21b einen Strom bzw. eine Spannung zu induzieren.

Um eine solche Magneteinrichtung 24 in Richtung der Kurbelwelle zu verschwenken und/oder zu verschieben, ist vorzugsweise eine Betätigungseinrichtung 32 vorgesehen, wie sie in Bezug auf die Ausführungen der Figuren und 8 dargestellt ist. Die an den Generatorspulen 33, 34 der ersten und zweiten Induktionseinrichtung 21a, 21b induzierte Wechselspannung kann vorteilhaft direkt über elektrische Leitungen zu den Spulen 15a des Steuerventils geleitet werden, ohne eine Gleichrichtung oder ein etwaiges elektrisches Schaltelement in der Pleuelstange 1 vorsehen zu müssen.

Vorzugsweise kann der Spulenstrom einer schaltbaren Statorspule 31 in der Weise verändert werden, um eine Veränderung einer induzierten Energie aufgrund einer Drehzahländerung der Kurbelwelle einer Hubkolbenmaschine auszugleichen.

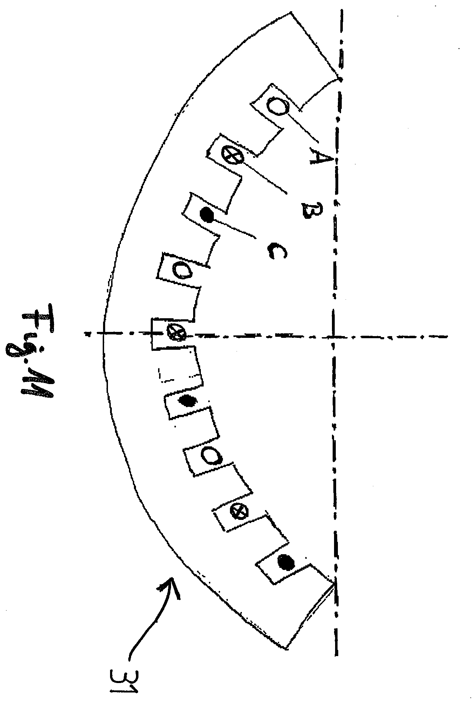

Weiter vorzugsweise sind die Statorspulen 31 der Magneteinrichtung 24 oder der Magneteinrichtungen 24a, 24b mit mehrphasigen Wicklungen A, B, C versehen, wie dies in Fig. 11 gezeigt ist.

Die Wicklungen der jeweiligen Phase A (Kreis), B (Kreuz) und C (Punkt) wechseln sich hierbei über die Länge der Statorspule ab. Insbesondere können zwei, drei oder mehr Phasen vorgesehen sein.

Mittels dieser Phasen der Statorspule 31 kann ein Drehfeld, auch genannt Wechselfeld oder Wanderfeld, generiert werden. Wird die Statorspule 31 mit einem solchen Drehfeld gegenläufig zur Pleuelbewegung beaufschlagt, kann zwischen der Pleuelstange 1 und der Magneteinrichtung 24 bzw. der Statorspule 31 eine beliebige Relativdrehzahl eingestellt werden. Insbesondere kann vorgesehen werden die Relativdrehzahl bei sich verändernder Kurbelwellendrehzahl konstant zu halten, um auch die Energieübertragung zwischen Magneteinrichung und Induktionseinrichtung konstant zu halten. Hierfür wird bei langsamen Motordrehzahlen bzw. Kurbelwellendrehzahlen ein hochfrequentes Drehfeld generiert. Mit zunehmender Motordrehzahl bzw. Kurbelwellendrehzahl wird die Drehfeldfrequenz dann reduziert.

Vorzugsweise wird eine Relativdrehzahl von etwa 30.000 UpM eingestellt, was in etwa einer übertragenen Leistung von 7 W entspricht, wenn die Pole in etwa eine Länge L von 8 mm und eine Breite B von 9 mm, wie in Fig. 9 gezeigt, aufweisen und die entsprechende Magneteinrichtung 24 eine diesbezüglich angepasste Ausdehnung aufweist. Die Relativdrehzahl einer Statorspule 31 mit einer mehrphasigen Wicklung kann in einer Steuerung (ECU) der Hubkolbenmaschine softwaremäßig und oder hardwaremäßig eingestellt werden (nicht dargestellt). Eine solche Steuerung ist insbesondere dazu eingerichtet, eine Leistungselektronik (nicht dargestellt) der Hubkolbenmaschine zur Regelung der Drehzahl des Drehfelds in Abhängigkeit der Drehzahl der Kurbelwelle zu regeln.

## Patentansprüche

1. Hubkolbenmaschine, mit zumindest einer mit einer Kurbelwelle (26) verbundenen längenverstellbaren Pleuelstange (1), welche zumindest einen ersten Stangenteil (2) mit einem kleinen Pleuelauge (3) und zumindest einen zweiten Stangenteil (4) mit einem großen Pleuelauge (5) aufweist, wobei die beiden Stangenteile (2, 4) mittels einer Längenverstelleinrichtung (100) zu- und/oder ineinander verschiebbar sind, wobei die Längenverstelleinrichtung (100) in zumindest einer Stellung eines Steuerventils (15) mit zumindest einer Hydraulikmediumleitung (14, 16) strömungsverbindbar ist, und in zumindest einer zweiten Stellung des Steuerventils (15) von der Hydraulikmediumleitung (16) trennbar ist, wobei das Steuerventil (15) induktiv betätigbar ist, wobei das Steuerventil (15) mit zumindest einer pleuelstangenfesten Induktionseinrichtung (21) elektrisch verbindbar oder verbunden ist, in welcher in zumindest einer Stellung der Pleuelstange (1) mittels zumindest einer Magneteinrichtung (24) ein elektrischer Strom und/oder eine elektrische Spannung induzierbar ist.

2. Hubkolbenmaschine nach Anspruch 1, **dadurch gekennzeichnet, dass** die Induktionseinrichtung (21) zumindest eine Induktionsschleife (22) aufweist.

3. Hubkolbenmaschine nach Anspruch 1 oder 2, **dadurch gekennzeichnet, dass** die Induktionseinrichtung (21) an zumindest einer Stirnseite (1b) der Pleuelstange (1) und/oder an einer Seitenfläche eines Lagerdeckels (17) des Pleuellagers (5a) der Pleuelstange (1) angeordnet ist.

4. Hubkolbenmaschine nach einem der Ansprüche 1 bis 3, **dadurch gekennzeichnet, dass** im Stromfluss zwischen der Induktionseinrichtung (21) und dem Steuerventil (15) zumindest eine elektrische Schaltvorrichtung (23) angeordnet ist.

5. Hubkolbenmaschine nach Anspruch 4, **dadurch gekennzeichnet, dass** die elektrische Schaltvorrichtung (23) durch einen Signalempfänger (29) betätigbar ist.

6. Hubkolbenmaschine nach einem der Ansprüche 1 bis 5, **dadurch gekennzeichnet, dass** die Magneteinrichtung (24) Polsegmente (27a, 27b) mit unterschiedlicher magnetischer Polung aufweist.

7. Hubkolbenmaschine nach einem der Ansprüche 1 bis 6, **dadurch gekennzeichnet, dass** die Magneteinrichtung (24) auf oder in zumindest einer Kurbelwange (25) der Kurbelwelle (26) angeordnet ist.

8. Hubkolbenmaschine nach einem der Ansprüche 1 bis 6, **dadurch gekennzeichnet, dass** die Magneteinrichtung (24) in einem Kurbelgehäuse (30) oder in einer Hydraulikmediumwanne angeordnet ist.

9. Hubkolbenmaschine nach einem der Ansprüche 1 bis 8, **dadurch gekennzeichnet, dass** die Magneteinrichtung (24) zumindest einen Permanentmagneten (28) aufweist.

10. Hubkolbenmaschine nach einem der Ansprüche 1 bis 9, **dadurch gekennzeichnet, dass** die Magneteinrichtung (24) schaltbar ausgeführt ist.

11. Hubkolbenmaschine nach Anspruch 10, **dadurch gekennzeichnet, dass** die Magneteinrichtung (24) zumindest eine Statorspule (31) aufweist.

12. Hubkolbenmaschine nach einem der vorhergehenden Ansprüche, wobei die Magneteinrichtung (24) oder die Magneteinrichtungen (24a, 24b) jeweils eine Statorspule (31) mit einer mehrphasigen Wicklung (A, B, C) aufweist bzw. aufweisen, eingerichtet, um ein mehrphasiges Drehfeld zu erzeugen.

13. Verfahren zum Betrieb einer Hubkolbenmaschine nach Anspruch 12, wobei das Drehfeld gegenläufig zur Pleuelbewegung erzeugt wird.

14. Verfahren nach Anspruch 13, wobei eine Drehzahl des Drehfelds in Abhängigkeit der Drehzahl einer Kurbelwelle eingestellt wird.

15. Verfahren zum Betrieb einer Hubkolbenmaschine nach einem der Ansprüche 11 oder 12, wobei ein Spulenstrom einer Statorspule (31) in der Weise verändert wird, um eine Veränderung einer induzierten Energie aufgrund einer Drehzahländerung einer Kurbelwelle auszugleichen.

## Claims

1. A reciprocating piston engine comprising at least one length adjustable connecting rod (1) connected to a crankshaft (26) and comprising at least one first rod part (2) with a small connecting rod eye (3) and at least one second rod part (4) with at least one large connecting rod eye (5), the two rod parts (2, 4) being displaceable with respect to and/or into each other by means of a length adjustment device (100), wherein the length adjustment device (100) can be fluidically connected to at least one hydraulic medium line (14, 16) in at least one position of a control valve (15), and can be separated from the hydraulic medium line (16) in at least one second position of the control valve (15), wherein the control valve (15) can be inductively actuated, wherein the control valve (15) can be or is electrically connected to at least one induction device (21) fixed to the connecting rod in which an electrical current and/or electrical voltage can be induced in at least one position of the connecting rod (1) by means of at least one magnet device (24).

2. The reciprocating piston engine according to claim 1, **characterized in that** the induction device (21) comprises at least one inductance loop (22).

3. The reciprocating piston engine according to claim 1 or 2, **characterized in that** the induction device (21) is arranged on at least a front side (1b) of the connecting rod (1) and/or on a side surface of a bearing cap (17) of the connecting rod bearing (5a) of the connecting rod (1).

4. The reciprocating piston engine according to one of claims 1 to 3, **characterized in that** at least one electrical switching apparatus (23) is arranged in the current flow between the induction device (21) and the control valve (15).

5. The reciprocating piston engine according to claim 4, **characterized in that** the electrical switching apparatus (23) is actuatable by a signal receiver (29).

6. The reciprocating piston engine according to one of claims 1 to 5, **characterized in that** the magnet device (24) comprises pole segments (27a, 27b) of different magnetic polarity.

7. The reciprocating piston engine according to one of claims 1 to 6, **characterized in that** the magnet device (24) is arranged on or in at least one crank arm (25) of the crankshaft (26).

8. The reciprocating piston engine according to one of claims 1 to 6, **characterized in that** the magnet device (24) is arranged in a crankcase (30) or in a hydraulic medium sump.

9. The reciprocating piston engine according to one of claims 1 to 8, **characterized in that** the magnet device (24) comprises at least one permanent magnet (28).

10. The reciprocating piston engine according to one of claims 1 to 9, **characterized in that** the magnet device (24) is of switchable design.

11. The reciprocating piston engine according to claim 10, **characterized in that** the magnet device (24) comprises at least one stator coil (31).

12. The reciprocating piston engine according to one of the proceeding claims, wherein each magnet device (24) or each of the magnet devices (24a, 24b) comprise(s) one stator coil (31) having a multiphase winding (A, B, C) configured to generate a multiphase rotating field.

13. A method for operating the reciprocating piston engine according to claim 12, wherein the rotating field is generated in opposite direction to the movement of the connecting rod.

14. A method according to claim 13, wherein a rotational speed of the rotating field is set as a subject to the rotational speed of a crankshaft.

15. A method for operating a reciprocating piston engine according to one of claims 11 or 12, wherein a coil current of a stator coil (31) is changed as to equalize a change in an induced energy due to a change in rotational speed of a crankshaft.

## Revendications

1. Moteur à pistons alternatifs, avec au moins une bielle (1) ajustable en longueur reliée à un vilebrequin (26), laquelle présente au moins une première partie de bielle (2) avec un petit œil de tête de bielle (3) et au moins une deuxième partie de bielle (4) avec un grand œil de tête de bielle (5), lesquelles parties de bielle (2, 4) peuvent être coulissées l'une par rapport à l'autre et/ou l'une dans l'autre au moyen d'un système d'ajustement longitudinal (100), dans lequel le système d'ajustement longitudinal (100) peut être relié en communication fluidique à au moins un conduit de milieu hydraulique (14, 16) dans au moins une position d'une soupape de commande (15) et peut être séparé du conduit de milieu hydraulique (16) dans au moins une deuxième position de la soupape de commande (15), dans lequel la soupape de commande (15) peut être actionnée de manière inductive, dans lequel la soupape de commande (15) peut être reliée ou est reliée électriquement à au moins un système d'induction (21) solidaire de la bielle, dans lequel, dans au moins une position de la bielle (1), un courant électrique et/ou une tension électrique peut être induit/induite au moyen d'au moins un système magnétique (24) .

2. Moteur à pistons alternatifs selon la revendication 1, **caractérisé en ce que** le système d'induction (21) présente au moins une boucle d'induction (22).

3. Moteur à pistons alternatifs selon la revendication 1 ou 2, **caractérisé en ce que** le système d'induction (21) est disposé au niveau d'au moins un côté frontal (1b) de la bielle (1) et/ou au niveau d'une face latérale d'un couvercle de coussinet (17) du coussinet de bielle (5a) de la bielle (1).

4. Moteur à pistons alternatifs selon l'une quelconque des revendications 1 à 3, **caractérisé en ce qu'**au moins un dispositif de commutation (23) électrique est disposé dans le flux de courant entre le système d'induction (21) et la soupape de commande (15).

5. Moteur à pistons alternatifs selon la revendication 4, **caractérisé en ce que** le dispositif de commutation (23) électrique peut être actionné par un récepteur de signaux (29) .

6. Moteur à pistons alternatifs selon l'une quelconque des revendications 1 à 5, **caractérisé en ce que** le système magnétique (24) présente des segments polaires (27a, 27b) avec une polarité magnétique différente.

7. Moteur à pistons alternatifs selon l'une quelconque des revendications 1 à 6, **caractérisé en ce que** le système magnétique (24) est disposé sur ou dans au moins un bras de manivelle (25) du vilebrequin (26).

8. Moteur à pistons alternatifs selon l'une quelconque des revendications 1 à 6, **caractérisé en ce que** le système magnétique (24) est disposé dans un carter de vilebrequin (30) ou dans une cuve de milieu hydraulique.

9. Moteur à pistons alternatifs selon l'une quelconque des revendications 1 à 8, **caractérisé en ce que** le système magnétique (24) présente au moins un aimant permanent (28).

10. Moteur à pistons alternatifs selon l'une quelconque des revendications 1 à 9, **caractérisé en ce que** le système magnétique (24) est réalisé de manière commutable.

11. Moteur à pistons alternatifs selon la revendication 10, **caractérisé en ce que** le système magnétique (24) présente au moins une bobine de stator (31).

12. Moteur à pistons alternatifs selon l'une quelconque des revendications précédentes, dans lequel le système magnétique (24) ou les systèmes magnétiques (24a, 24b) présente ou présentent respectivement une bobine de stator (31) avec un enroulement (A, B, C) polyphasé mis au point pour générer un champ de rotation polyphasé.

13. Procédé servant à faire fonctionner un moteur à pistons alternatifs selon la revendication 12,
dans lequel le champ de rotation est généré en sens inverse pour déplacer la bielle.

14. Procédé selon la revendication 13, dans lequel une vitesse de rotation du champ de rotation est réglée en fonction de la vitesse de rotation d'un vilebrequin.

15. Procédé servant à faire fonctionner un moteur à pistons alternatifs selon l'une quelconque des revendications 11 ou 12, dans lequel un courant de bobine d'une bobine de stator (31) est modifié de manière à compenser une modification d'une énergie induite du fait d'une modification de vitesse de rotation d'un vilebrequin.
